# EUROPEAN PATENT APPLICATION

(11) **EP 2 107 626 A1**
(43) Date of publication of application: **07.10.2009**
(21) Application number: 09155097.0
(22) Date of filing: 13.03.2009
(51) Int. Cl.: H01M 4/02, H01M 4/48, H01M 10/40

(54) **Layered crystal material, manufacturing method of electrode material, and electric storage device**

(30) Priority: 31.03.2008 JP 2008090736
(71) Applicant: Fuji Jukogyo Kabushiki Kaisha, Tokyo160-8316 (JP)
(72) Inventor: Shiozaki, Ryuji, Tokyo 160-8316 (JP); Maruyama, Daisuke, Tokyo 160-8316 (JP); Ando, Nobuo, Tokyo 160-8316 (JP)
(74) Representative: Sajda, Wolf E.

(57) **Abstract**

A physical property of a suspension into which a plurality of lithium materials, such as a lithium sulfide, lithium hydroxide, etc., and a vanadium material are dissolved is adjusted by using a plurality of lithium materials, According to the adjustment, the valence of pentavalent vanadium ions is controlled to be a desired ratio. A material having the obtained layered crystal particles and an amorphous part is used as a starting material, and this material is subject to a heat treatment. With this process, the layered crystal particles grow, while the amorphous part is decreased. Consequently, it is confirmed that the rate of capacity deterioration is improved.

## Description

### BACKGROUND OF THE INVENTION

### 1. Field of the Invention

The present invention relates to a technique of a layered crystal material of vanadium oxide, and more particularly to a technique well adaptable to a positive electrode active material or the like of a lithium ion secondary battery.

### 2. Description of the Related Arts

The technique described below has been studied for completing the present invention. The summary is as follows.

In a lithium ion secondary battery, a battery performance is enhanced by using, for a positive electrode, an active material having lithium ions intercalated therein at the beginning. Vanadium pentoxide is a promising material as the active material. It has been found that vanadium pentoxide having a microcrystal structure with a predetermined layer length is effective for the positive electrode active material, as disclosed in WO2008-056794.

As disclosed in the aforesaid application, the vanadium pentoxide described above is manufactured through a manufacturing process described below. Specifically, vanadium pentoxide is used for a vanadium source as a layered crystal material. Lithium sulfide is used as a lithium source. 3,4-ethylenedioxythiophene (EDOT) is used as a monomer of a sulfur-containing organic conductive polymer. The three materials described above are suspended in water, and heated to reflux.

Thereafter, the resultant is filtered, and then the filtrate is concentrated. After the concentration, the resultant is dried under vacuum, and pulverized by a ball mill. After the pulverization, the resultant is classified, whereby powders of layered crystal material are obtained. The obtained powders can effectively be used as an active material for the positive electrode.

The layered microcrystal particles of vanadium pentoxide obtained by the manufacturing method described above cannot be obtained alone, but an amorphous part is mixedly present. Specifically, in the manufacturing method described in the above-mentioned application, the progress of amorphization of the layered crystal material is adjusted by paying attention to the temperature for the heating, and the temperature for the concentration, or the like, whereby the microcrystal particle having a predetermined layer length is obtained.

The application described above reports that the microcrystal particles of vanadium pentoxide can greatly enhance battery performance. However, the material manufactured by the manufacturing method proposed so far has both the amorphous part and the microcrystal particles mixedly present. Even when the material described above is used as a positive electrode active material, it is difficult to compare the physical property as the active material because the ratio of the microcrystal particles and the amorphous parts is subtly different. When a large amount of microcrystal particles of vanadium pentoxide are manufactured, it is considered that the subtle variation in the production condition of each lot affects the formation of final crystals.

The charging/discharging characteristic is deteriorated at the amorphous part. Thus, the presence of the amorphous part is non-preferable. When the amorphous part is mixedly present, the problem arises that it is difficult for the electrolyte solution to permeate into the surrounding of the microcrystal particles. In this case, the contact efficiency between the microcrystal particles and the electrolyte solution is decreased, with the result that a high cycle characteristic might not be exhibited.

In view of this, the present inventors have considered that the amorphous part should be decreased as much as possible, or the amorphous part should be completely eliminated. If the amorphous part is decreased as much as possible, or the amorphous part can completely be eliminated, the affect of the amorphous part is negligible to some extent in the estimation of the characteristic based on the obtained active material. Specifically, the characteristic can be considered to be the one based on the layered crystal material composed of the microcrystal particles of vanadium pentoxide.

The application filed previously describes the manufacturing method of the structure in which lithium ions are doped into the layered crystal material of vanadium pentoxide. It is preferable if the amorphous part is decreased or eliminated by the manufacturing method following the manufacturing method described in the previously filed application.

### SUMMARY OF THE INVENTION

The present invention aims to provide a layered crystal material of vanadium having a less amorphous part.

The foregoing and other objects and novel features of the present invention will be apparent from the description of various embodiments in the specification of the present application and the attached drawings.

The summary of the representative invention, among the embodiments described in the present application, will be explained below.

The amorphous part is decreased so as to grow the layered crystal particle, which is mixedly present, up to close to 100 nm at the maximum, whereby the ratio of capacity deterioration of an electric storage device, provided with an electrode having such a material as an active material, is improved.

The effect obtained by the representative invention will briefly be described below.

In the present invention, the vanadium oxide used as the positive electrode active material has microcrystal particles having a layer length of less than 100 nm. Therefore, the performance of the electric storage device including the electrode, which uses the vanadium oxide, is enhanced. For example, the ratio of capacity deterioration can be improved.

### BRIEF DESCRIPTION OF THE DRAWINGS

- FIG. 1: is a flowchart showing a process of a manufacturing method according to the present invention;
- FIG. 2: is a flowchart showing a process of a manufacturing method according to the present invention;
- FIG. 3: is a flowchart showing a process of a manufacturing method according to the present invention;
- FIG. 4: is a flowchart showing a process of a manufacturing method according to the present invention;
- FIG. 5: is a flowchart showing a process of a manufacturing method according to the present invention;
- FIG. 6: is a flowchart showing a process of a manufacturing method according to the present invention;
- FIG. 7: is a conceptual explanatory view schematically showing an amorphous state of a starting material;
- FIG. 8: is a conceptual explanatory view schematically showing the case in which a heat treatment is performed on the amorphous state of the starting material;
- FIG. 9: is an explanatory view showing a structure of a battery; and
- FIGS. 10A and 10B: are explanatory views showing a relationship between the heat treatment and a rate of capacity deterioration.

### DETAILED DESCRIPTION OF THE PREFERRED EMBODIMENTS

An embodiment of the present invention will be explained in detail below with reference to the drawings. In all the Figures for explaining the embodiment, the same components are identified by the same numerals, and the description will not be repeated.

The present invention is a technique relating to an electrode material. The present invention relates to a novel layered crystal material usable for an electrode. Specifically, the layered crystal material has microcrystal particles of vanadium oxide having a layer length of less than 100 nm. The material described above can be used as a positive electrode active material.

In the layered crystal material described above, a presence ratio of an amorphous part is smaller than the presence ratio of an amorphous part in the conventional layered crystal particles. It is confirmed that, even when the layered crystal particle grows in a size close to 100 nm, the layered crystal material can effectively be used as an electric storage device such as a lithium ion secondary battery by decreasing the amorphous part.

The term "layer length" in the specification of the present application means an average diameter of a primary particle determined by the observation with an electron microscope.

The present invention also relates to a manufacturing method of an electrode material. The present invention discloses a manufacturing method of an electrode material using the layered crystal vanadium usable for the positive electrode active material. In the manufacturing method, the amorphous vanadium oxide, which is manufactured from at least a vanadium material and a lithium material, is employed as a starting material. The starting material described above is heated to a temperature within, for example, not less than 105 °C to not more than 500 °C so as to impart heat history. For example, the rate of temperature rise is not less than 0.1 °C/min and not more than 40 °C/min.

When the rate of temperature rise is less than 0.1 °C/min, the temperature rise is extremely slow from the viewpoint of a practical manufacturing, which necessitates much time for manufacturing. When the rate of temperature rise exceeds 40 °C/min, the temperature rise becomes too fast, which entails the formation of coarse crystals. More preferably, the rate of temperature rise is not more than 10 °C/min. When the active material having coarse crystals of 100 nm or more is used for an electrode, the performance is poor.

Therefore, the layered crystal particle is preferably less than 100 nm. In the application previously filed, the inventors have determined that layered crystal particles of 30 nm or less are preferable. However, the present inventors have found that even the layered crystal particles of less than 100 nm exceeding 30 nm can effectively be used. In the present invention, the amorphous part is decreased, and the layered crystal particles grow more by the suppressed amorphous part. The layered crystal particles grow up to close to 100 nm.

In the manufacturing method described above, the vanadium oxide in the amorphous state is used as the starting material as described above. During the manufacturing process, the amorphous part is decreased from the starting material, i.e., the amorphous part is suppressed. On the other hand, the layered crystal particles of vanadium oxide mixedly present with the amorphous part increases. The starting material described above is manufactured from, for example, at least a vanadium material and a lithium material.

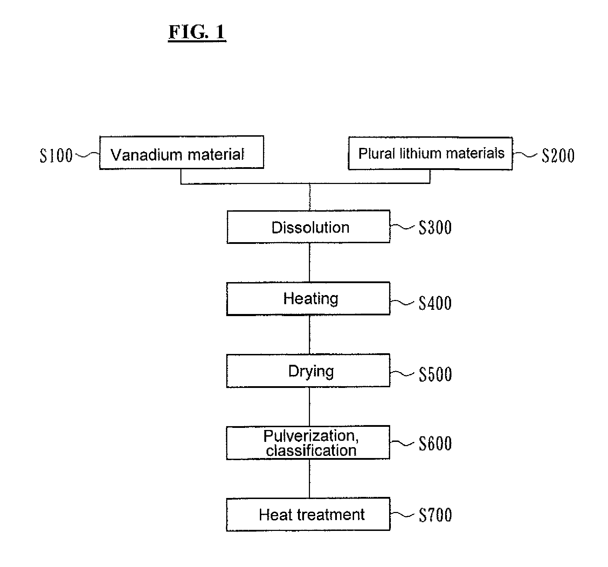

The method of manufacturing the amorphous starting material according to the present invention will be explained with reference to the flowcharts shown in FIGS. 1, 2 and 3. A vanadium material is prepared at step S100 in FIG. 1. Further, a plurality of lithium materials are prepared at step S200.

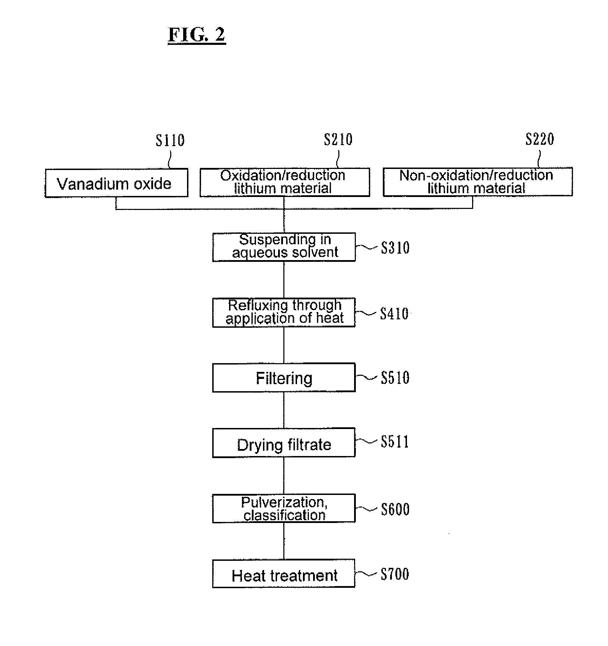

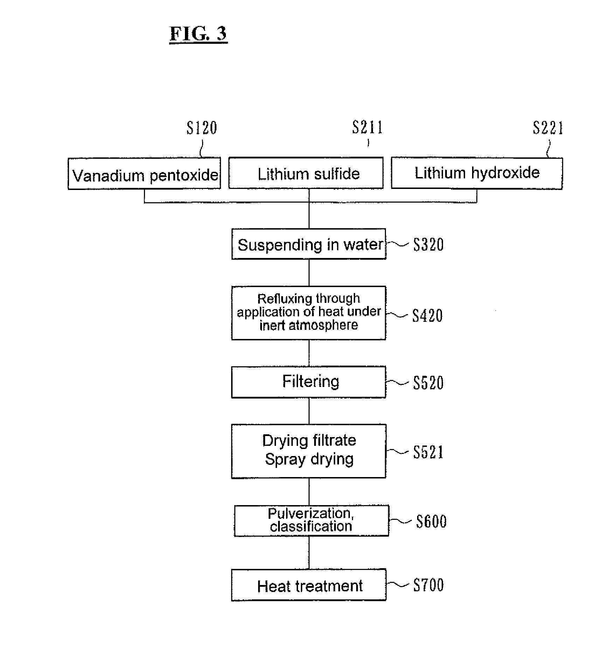

Vanadium oxide can be prepared, as shown in step S 110 in FIG. 2, as the vanadium material prepared at step S100. Vanadium pentoxide is prepared as shown in step S 120 in FIG. 3 as the vanadium oxide.

A lithium compound (hereinafter referred to as oxidation/reduction lithium) having oxidation/reduction performance and serving as a reducing agent, and a lithium compound (hereinafter referred to as non-oxidation/reduction lithium) having no oxidation/reduction performance can be prepared as shown in steps S210 and 220 in FIG. 2 as the plurality of lithium sources prepared at step S200. A lithium sulfide can be prepared as shown in step S211 in FIG. 3 as the oxidation/reduction lithium. A lithium hydroxide can be prepared as the non-oxidation/reduction lithium as shown in step S221 in FIG. 3.

The vanadium compound and the plurality of lithium compounds are dissolved at step S300. For example, they can be suspended in an aqueous solvent as indicated at step S310 in FIG. 2. Water can be used as the aqueous solvent as indicated at step S320 in FIG. 3.

After the vanadium compound and the plurality of lithium compounds have been suspended and dissolved in the aqueous solvent as described above, the suspension is heated at step S400. In the heating, the suspension can be refluxed through the application of heat as indicated at step S410 in FIG. 2. Specifically, as indicated at step S420 in FIG. 3, the suspension can be refluxed through the application of heat under an inert atmosphere. The inert atmosphere can be achieved by changing the previously existing air atmosphere in the heating to nitrogen atmosphere or a rare gas atmosphere such as Ar or the like. In the heating, the suspension can be left for a predetermined time at a predetermined temperature. For example, the suspension can be left for 24 hours at 75 °C.

Thereafter, as indicated at step S500 in FIG. 1, the suspension is heated so at to be dried. For example, as shown in FIG. 2, the suspension is filtered at step S510, and the filtrate can be dried at step S511. The suspension can be dried such that the filtrate filtered at step S520 in FIG. 3 can be subject to spray drying at step S521.

Of course, the suspension can be concentrated and dried. However, the crystal state afterward is changed due to the manner of applying heat in the concentration. Therefore, the manner of applying heat is difficult. The spray drying is preferable. Since the suspension is dried under the sprayed state, the change in the structure of the vanadium involved with the concentration can be prevented.

The material thus obtained can be pulverized and classified as indicated at step S600 in FIGS. 1, 2 and 3 in case where the suspension is concentrated and dried. A ball mill or the like is used for pulverization. The obtained materials are classified into those having a particle diameter whose upper limit is 50 µm.

In the manufacturing method of the starting material having the amorphous part according to the present invention, the sulfur-containing organic conductive material such as EDOT is not used as the material. Therefore, the bonding of the layered crystal structure and the vanadium pentoxide caused by the EDOT can completely be eliminated

In the manufacturing method of the starting material, a plurality of lithium sources are used with respect to the vanadium material. For example, the oxidation/reduction lithium salt and the non-oxidation/reduction lithium salt are used.

In the manufacturing method described above, the oxidation/reduction lithium salt and the non-oxidation/reduction lithium salt are mixed at a predetermined ratio. Accordingly, the liquid property of the suspension in which the vanadium material and the lithium materials are suspended in the aqueous solvent is controlled. Specifically, the liquid property of the suspension in which the vanadium material is dissolved in the solvent is specified. In other words, the pH value of the suspension into which the vanadium is dissolved is specified.

After the material has been suspended, the suspension is heated so as to dissolve the vanadium material such as the vanadium pentoxide. However, in the manufacturing method of the starting material according to the present invention, even when the suspension keeps on being heated after the dissolution even after the vanadium material has been dissolved through the application of heat, the valence distribution of the vanadium is kept to be constant. In the manufacturing method described above, the valence distribution of vanadium rarely changes even after the dissolution through the application of heat. It is supposed that the reason is that the suspension is heated under an inert atmosphere, as described later.

Since the physical property of the liquid in which the vanadium compound is dissolved is controlled, the valence of the vanadium ions of the vanadium compound that is dissolved into aqueous solvent can be controlled. For example, the number of the pentavalent vanadium ions can be increased more than the number of the vanadium ions having four or less valences. As described above, the plurality of lithium compounds are dissolved into the aqueous solvent in such a manner that the pH value of the filtrate of the suspension, i.e., the suspension after the heating, assumes a predetermined value, whereby the valence of the vanadium ions in the filtrate can be controlled.

Usable vanadium compounds include, in addition to the vanadium pentoxide (V₂O₅), vanadium oxides such as VO₂, VO_{0.9}, V₆O₁₃, V₄O₉, V₇O₃, V₂O₃, etc.

Examples of the oxidation/reduction lithium compound include, in addition to the lithium sulfide described above, lithium selenide, and lithium telluride. The oxidation/reduction lithium can be used alone or a plurality of lithium compounds can be mixed. When the reduction of sulfur is required, in particular, the lithium sulfide can be mixed.

Examples of the non-oxidation/reduction compound include, in addition to the lithium hydroxide, lithium acetate, lithium carbide, lithium chloride, lithium nitride, lithium azide, etc. The non-oxidation/reduction lithium compounds can be used alone or a plurality of compounds can be mixed.

Aqueous solvents can be used in order to dissolve the vanadium compound. In the present specification, the aqueous solvent includes water. Mixture solvents such as water and alcohol can be used, if it is usable. Organic solvent, such as alcohol, that has excellent affinity to water can be used alone. On the other hand, non-aqueous solvents cannot be used.

As described above, the vanadium compound and a plurality of lithium compounds are suspended in aqueous solution, and the pH value of the solution is adjusted, whereby the ratio of the distribution of the valence of vanadium ions is controlled. After the suspension has been prepared, the suspension is heated under an inert atmosphere.

Under the conventional air atmosphere, the large variation in the valence of the vanadium ions is produced even when the suspension is heated and refluxed for about 24 hours. The present inventors carried out the heating and reflux under an argon gas atmosphere. Specifically, it was confirmed that, under the argon atmosphere, the ratio of the distribution of the valence of the pentavalent vanadium ions and the tetravalent vanadium ions was rarely changed from the ratio at the beginning. The same tendency was also observed even under other rare gas such as He or nitrogen atmosphere.

Specifically, the manufacturing method of the starting material described above can be understood as the one in which the non-use of the sulfur-containing organic conductive material, the use of a plurality of lithium sources, and heating under an inert atmosphere afterward are combined. In manufacturing the layered crystal material described above, the enhancement of reproducibility is aimed as described above. The present inventors have conceived that the reproducibility of the layered crystal material can be determined from the first discharge energy.

On the other hand, the manufacturing method described above can be understood as follows from another aspect. Specifically, the manufacturing method described above can be understood as the one in which the physical property of the solution into which the vanadium compound is dissolved is controlled by the plurality of lithium sources in order to control the distribution ratio of the valence of the target vanadium ions. Examples of the method according to another aspect include the control of the valence of the pentavalent vanadium ions and tetravalent vanadium ions as described above.

The manufacturing method described above can be understood, from still another aspect, as the one of a heating method with the adjusted ratio of the valence in the suspension maintained. Examples of the method according to still another aspect include the heating and reflux under the inert atmosphere as described above. The manufacturing method described above can further be understood as the one having the feature of the control of the valence of ions by the plurality of lithium ion sources and the feature of the heating under the inert atmosphere.

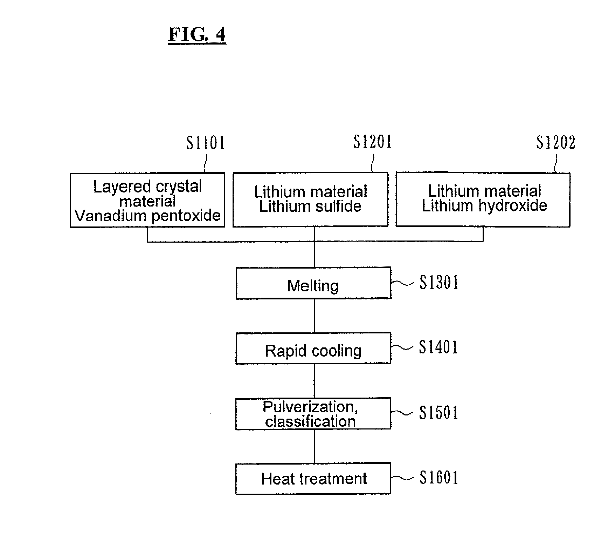

The starting material can be manufactured even by the method other than the manufacturing method shown in FIGS. 1, 2 and 3. For example, as shown by the flowchart in FIG. 4, the starting material can be manufactured even by fusing the vanadium material and a plurality of lithium materials. In the manufacturing method described above, the sulfur-containing organic conductive material such as EDOT is also not used as the material.

Vanadium pentoxide is prepared as shown in step S1101 as the vanadium material. A plurality of lithium materials are prepared at steps S1201 and S1202. For example, a lithium sulfide is prepared at step S1202. A lithium hydroxide is prepared at step S1202. The vanadium material and the plurality of lithium materials are fused in a pot, for example, at step S1301.

The melt solution is rapidly cooled at step S1401. The melt solution can be cooled rapidly in such a manner that the melt solution is collided with a cooled iron plate, or that the melt solution is brought into contact with a roll that is rotating with high speed. Thereafter, the cooled melt solution can be pulverized and classified at step S1501. According to the method described above, the starting material having the amorphous part can be manufactured.

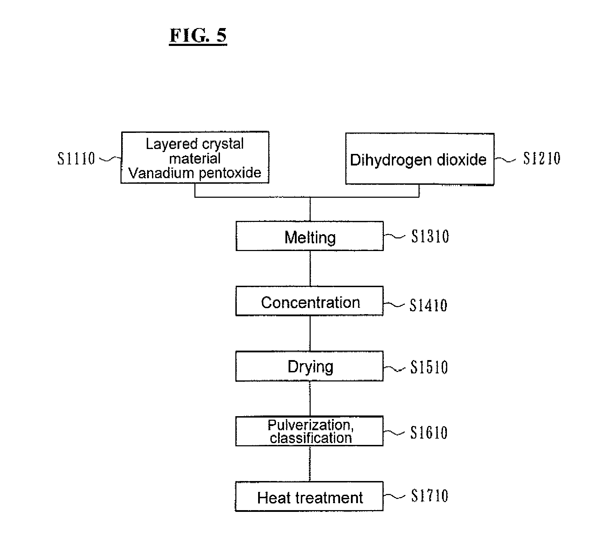

The starting material having the amorphous part can be manufactured according to the manufacturing method shown in the flowchart in FIG. 5. Specifically, as shown in FIG. 5, vanadium pentoxide is prepared as a layered crystal material at step S1110. Further, water of dihydrogen dioxide is prepared at step S1210. At step S 1310, the vanadium pentoxide prepared at step S1110 is melted in the water of dihydrogen dioxide prepared at step S1210. Then, the solution obtained at step S1310 is concentrated and solidified at step S1410. The concentrate obtained by the concentration is dried under vacuum at step S1510. The resultant is pulverized into particles each having a predetermined diameter by a ball mill at step S1610, and the obtained particles are subject to sieving for classification.

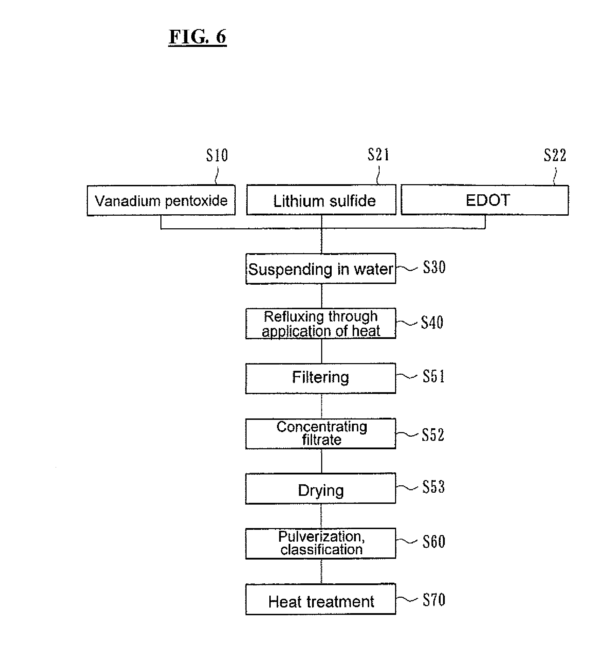

The manufacturing methods shown in the flowcharts in FIGS. 1 to 5 do not use a sulfur-containing organic conductive material such as EDOT as a material. However, in the manufacturing method according to the present invention in which the amorphous part is used as the starting material, the sulfur-containing organic conductive material such as EDOT can be used as the material as shown in the flowchart in FIG. 6.

The layered crystal material effective as the positive electrode material for the non-aqueous lithium secondary battery is manufactured through the manufacturing process shown in the flowchart in FIG. 6. Specifically, as shown in FIG. 6, a layered crystal material of vanadium pentoxide, for example, is prepared as the vanadium oxide at step S10. Further, an aqueous lithium ion source is prepared at step S21, and a sulfur-containing organic conductive material is prepared at step S22.

The vanadium pentoxide, aqueous lithium ion source, and sulfur-containing organic conductive material prepared at steps S10, S21, and S22, respectively, are suspended in water at step S30. The amorphization is started due to the suspension. A lithium sulfide and lithium hydroxide can be used as the aqueous lithium ion source, for example. 3,4-ethylenedioxythiophene (EDOT) can be used as the sulfur-containing organic conductive material.

The suspension thus obtained is refluxed through the application of heat for a predetermined time at step S40. After the suspension is refluxed through the application of heat at step S40, the suspension is filtered at step S51 so as to remove the solid material from the suspension that is refluxed through the application of heat. The filtrate from which the solid material is removed is concentrated at step S52.

After the concentration of the filtrate, the resultant is dried under vacuum at step S53. Thereafter, at step S60, the resultant is pulverized into particles each having a predetermined diameter by a ball mill, and the obtained particles are subject to sieving for classification. In this manner, the amorphous part is obtained in which the layered crystal particles of vanadium pentoxide are mixedly present. The amorphous part can be used as the starting material in the present invention.

In FIGS. 1 to 5, the sulfur-containing organic conductive material such as EDOT is not at all used as a material. This can perfectly prevent the crystal structure from becoming coarse due to the polymerization of the microcrystal structure caused by the EDOT.

Different from the method shown in FIGS. 1 to 3, the physical property of the suspension, such as the pH value, is not adjusted at step S30. Specifically, the physical property of the suspension is not deliberately adjusted. In FIGS. 1 to 3, the ratio of the valence of vanadium ions is controlled by adjusting the physical property of the suspension. Specifically, the valence of the vanadium in the filtrate of the suspension is controlled.

Then, the suspension is refluxed through the application of heat at step S40. In this case, the suspension is refluxed through the application of heat under air atmosphere. On the other hand, the suspension is refluxed through the application of heat under an inert atmosphere such as nitrogen or Ar at step S420 in FIG. 3. By employing the process described above, the suspension can be heated without changing the controlled ratio of the valence of the vanadium ions in the suspension.

Although the filtrate is concentrated under lowered pressure at step S52 in FIG. 6, the present invention dares to recommend the spray drying.

In the present invention, the amorphous part of the starting material does not have to be formed according to the manufacturing method described above. According to the manufacturing method described above, the material in which the amorphous part and the layered crystal particles of vanadium pentoxide are mixedly present is obtained. However, even if the material has only the amorphous part, i.e., 100 % amorphous part, the material can be used as the starting material of the present invention.

For example, the amorphous part as the starting material is formed as shown in FIGS. 1 to 6. Then, in the present invention, the starting material having the amorphous part is subject to a heat treatment. For example, the starting material is subject to the heat treatment under a predetermined condition at step S700 in FIGS. 1 to 3.

In the heating treatment at step S700, the starting material having the amorphous part is heated to the temperature within 105 °C to 500 °C. When the temperature is less than 105 °C, moisture present together with the amorphous part cannot be eliminated. When the temperature exceeds 500 °C, the disadvantage is considered in which it is difficult to maintain the amorphous state, by which the particle growth caused by the crystallization is accelerated. Therefore, the temperature range is determined to be not less than 105 °C to not more than 500 °C. More preferably, the temperature range is within not less than 150°C and not more than 250°C.

In the heat treatment, the starting material is heated with a rate of temperature rise of not less than 0.1 °C/min and not more than 40 °C/min. When the rate of temperature rise is less than 0.1 °C/min, which is extremely slow from the viewpoint of the substantial production, it takes much time. When the rate of temperature rise exceeds 40 °C/min, the rate of temperature rise is too fast, which allows the crystal to be coarse. More preferably, the rate of temperature rise is not less than 1.0 °C/min and not more than 10 °C/min. The temperature can basically increase slowly. It is preferable that the temperature rises slowly during the time for the process at the real production site.

It can be programmed such that the rate of temperature rise increases up to the temperature range lower than the target temperature, and the rate of temperature rise decreases in the vicinity of the target temperature. By doing so, the object can be achieved, even if the time taken for the total process is cut.

In the heat treatment, the temperature is kept for 30 minutes or more and 100 hours or less, when the temperature reaches the target temperature within not less than 105 °C and not more than 500 °C. When the temperature is kept for less than 30 minutes, the reaction might not be completed. When the temperature is kept for over 100 hours, there is no structure change appearing, so that the expected effect cannot be obtained. More preferably, the temperature is kept for not less than 1 hour and not more than 24 hours.

The heat treatment described above can be performed under a mixture atmosphere of argon, helium, or an inert gas such as nitrogen, and oxygen. The heat treatment can be performed under an oxygen partial pressure of not less than 0 % and not more than 100 %.

The amorphous part is gradually decreased, and the microcrystal layered crystal particles increase through the heat treatment described above.

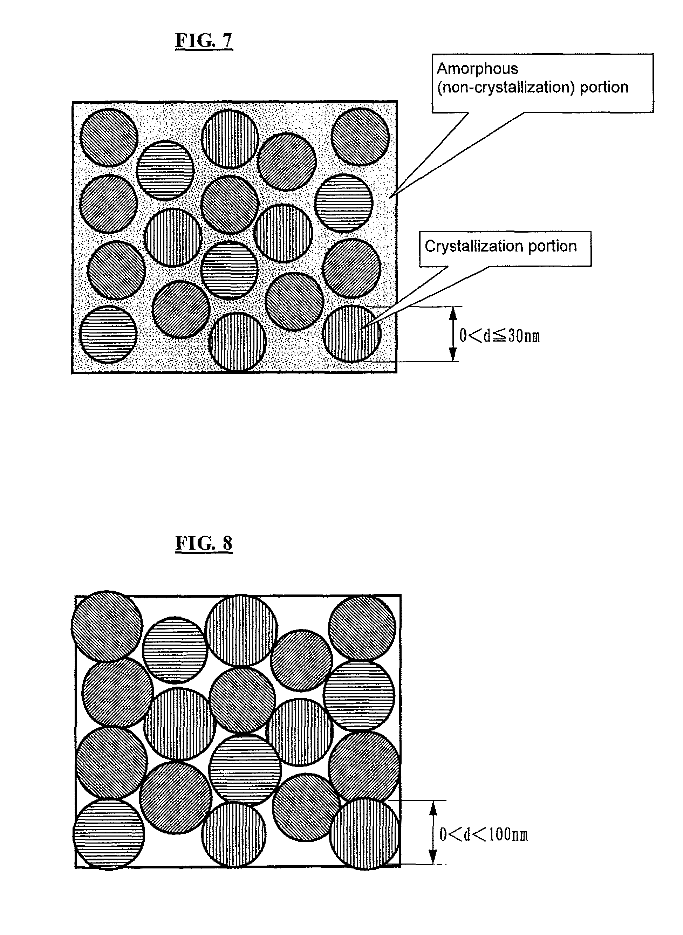

FIGS. 7 and 8 schematically show the state. In FIGS. 7 and 8, the layered crystal particles are represented by circles. The fine parallel lines in each of the circle indicate a gap between layers. The directions of the gaps between layers direct toward different directions as shown in FIGS. 7 and 8.

In the description above, the amorphous part obtained at step S600 in FIGS. 1 to 3 is employed as the starting material. However, the starting material having the amorphous part obtained at step S1501 in FIG. 4 can be subject to the heat treatment indicated at step S1601. Alternatively, the starting material having the amorphous part obtained at step S1610 in FIG. 5 can be subject to the heat treatment indicated at step S1710. Alternatively, the starting material having the amorphous part obtained at step S60 in FIG. 6 can be subject to the heat treatment at step S70.

The amorphous state of the starting material is as indicated in FIG. 7, for example. Fine layered crystal particles are mixedly present in the amorphous part. For example, when the starting material is manufactured according to the method shown in FIG. 1, the starting material in which the layered crystal particles of not more than 30 nm are scattered in the amorphous is formed.

On the other hand, when the amorphous part shown in FIG. 7 is used as the starting material, and this starting material is subject to the heat treatment as described above, the starting material becomes as schematically shown in FIG. 8. Specifically, the amorphous part is decreased, and the layered crystal particles increase by the decreased amorphous part.

As schematically shown in FIG. 8, the average layer length of the layered crystal particles is up to close to 100 nm. Although not shown, it is supposed that the amorphous part is present at the interface between the layered crystal particles. The amorphous part is formed between the adjacent layered crystal particles in which layers are shifted with each other.

At which ratio the amorphous part and the layered crystal particles are mixedly present can be verified by using a cross-sectional photograph by a TEM or the like. Specifically, a plurality of cross-sectional photographs of the layered crystal material from one direction are taken by the TEM. For example, the cross-sectional photographs are taken within the area of about 300 nm by the TEM at a certain interval.

The area ratio of the amorphous part and the layered crystal particles is obtained in each of the plurality of cross-sectional photographs of TEM. From each of the area ratios, the average area ratio of the plurality of photographs is obtained. The average area ratio indicates the average mixture ratio of the amorphous part or the layered crystal particles.

In the present invention, the average mixture ratio of the layered crystal particles is, for example, at least not less than 95 %. The inventors consider that there is no problem in the cycle performance when the amorphous part is about 5 % or less.

In the starting material having the amorphous part, the layered crystal particles that are crystallization portions are surrounded by the amorphous part and are scattered. Therefore, the transportation of the lithium ions to the layered crystal particles is inhibited by the amorphous portion. The amorphous portion is also the portion where the initial capacity is deteriorated.

However, the amorphous part in the starting material is subject to the heat treatment, whereby the amorphous part can be removed as schematically shown in FIG. 8. When the amorphous portion is not present in the space between the layered crystal particles, the electrolyte solution is easy to be impregnated by that much. Therefore, when the resultant material is used as the active material of an electrode, the contact efficiency between the fine layered crystal particles and the electrolyte solution increases, so that a high cycle performance is achieved.

Subsequently explained is the case in which the layered crystal material of vanadium pentoxide manufactured by the manufacturing method according to the present invention is used as an active material. Specifically, the case in which the layered crystal material of vanadium pentoxide manufactured by the manufacturing method according to the present invention is used as a positive electrode active material of a lithium ion secondary battery.

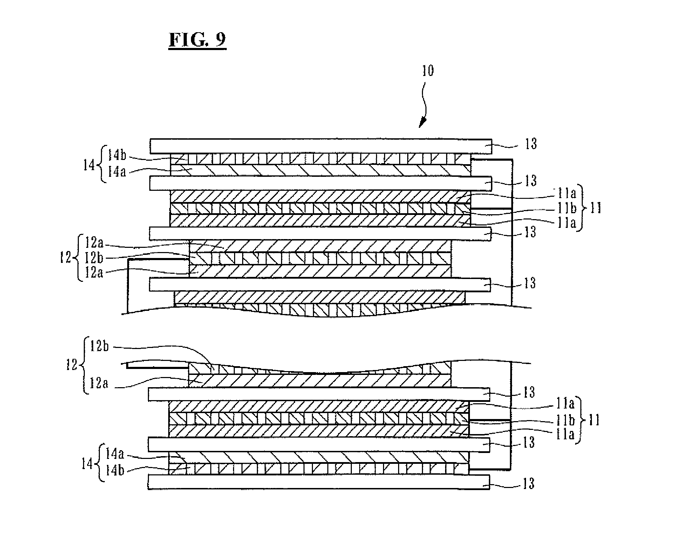

The lithium ion secondary battery 10 has a structure as shown in FIG. 9, for example. The lithium ion secondary battery 10 has negative electrodes 11 and positive electrodes 12 that are laminated alternately. A separator 13 is provided between each of the negative electrodes 11 and each of the positive electrodes 12. The negative electrodes 11 are provided at the outermost parts of a laminate unit having a plurality of negative electrodes 11 and the positive electrodes 12. Specifically, the structure in which the positive electrodes 12 and the negative electrodes 11 are laminated alternately with the separators 13 provided therebetween is sandwiched between both negative electrodes 11. Thus, an electrode unit is formed.

Lithium electrodes 14 are provided at the outside of the outermost layers of the negative electrodes 11 arranged at the outermost parts. The lithium electrodes 14 are provided so as to be opposite to the negative electrodes 11 arranged at the outermost parts. Each of the lithium electrodes 14 has, for example, a current collector 14b and a metal lithium 14a mounted on the current collector 14b with a predetermined thickness. The current collector 14b is a porous member having holes formed thereon. Lithium ions eluted from the lithium electrode 14 is pre-doped into the negative electrode 11.

Each of the negative electrodes 11 constituting the electrode unit has a current collector 11b and a negative electrode active material 11a provided on the current collector 11b with a predetermined thickness. The current collector 11b is a porous member having holes formed therein. Each of the positive electrodes 12 has a current collector 12b and a positive electrode active material 12a provided on the current collector 12b with a predetermined thickness. The current collector 12b is a porous member having holes formed therein.

The electrode unit having the aforesaid structure is impregnated into electrolyte solution, whereby the lithium ion secondary battery 10 is constituted.

The negative electrode active material and the positive electrode active material are respectively mixed with a binder, conductive assistants, and water so as to be formed into slurry. The active material formed into the slurry is applied onto the corresponding current collector with a predetermined thickness by a die coater or the like. Then, the slurry is dried, whereby both electrodes serving as the negative electrode 11 and the positive electrode 12 are formed.

The materials described below can be used for the negative electrode active material. Examples of the materials include a lithium-intercalated carbon material, etc., in the case of a non-aqueous lithium ion secondary battery. Examples of the carbon materials include graphite, non-graphite carbon material, polyacene-based material, etc.

Examples of the non-graphite carbon material include hard carbon (non-graphitizable carbon material), etc. Examples of the polyacene-based material include PAS that is an insoluble and infusible base and has a polyacene skeletal structure. The negative electrode active materials allow lithium ions to be reversibly doped.

When the carbon material or the like that allows lithium ions to be doped or de-doped is used, the lithium electrode is separately provided in order to pre-dope the lithium ions from the lithium electrode to the negative electrode at the initial charging. Examples of the lithium ion source include metal lithium or lithium-aluminum alloy. Specifically, the material that contains at least lithium elements and can supply lithium ions can be used.

In the present invention, the term "doping (dope)" involves "occlude", "carry", "absorb" or "insert", and specifically a phenomenon where lithium ions and/or anions enter the positive electrode active material or the negative electrode active material. The term "de-doping (de-dope)" involves "release" and "desorb", and specifically a phenomenon where lithium ions or anions desorb from the positive electrode active material or the negative electrode active material.

The layered crystal material of vanadium pentoxide manufactured by the manufacturing method according to the present invention is used as the positive electrode active material. For example, it is used as the positive electrode active material of the non-aqueous lithium secondary battery shown in FIG. 9.

It is preferable that the lithium ions are doped at a ratio of 0.1 to 6 in a molar ratio with respect to the metal oxide of vanadium pentoxide. When the doping amount of the lithium ions is less than 0.1 in a molar ratio, the doping effect cannot sufficiently be exhibited. On the other hand, when the doping amount of the lithium ions exceeds 6, the metal oxide might be reduced to metal, thus non-preferable.

The plurality of lithium sources described above can be used as a lithium ion source, for example. Examples of the oxidation/reduction lithium source include lithium sulfide. Examples of the non-oxidation/reduction lithium source include lithium hydroxide.

Polyvinylidene fluoride (PVdF) or the like can be used as the binder. The binder described above is preferably mixed with the conductive particles described later to form slurry. The slurry is applied onto the conductive base, which is the current collector, with a predetermined thickness, whereby the electrode is formed.

Examples of the conductive assistant include conductive carbon such as Ketchen black, metal such as copper, iron, silver, nickel, palladium, gold, platinum, indium, tungsten, metal oxide such as indium oxide, tin oxide, etc. The conductive particle can be contained in a ratio of 1 to 30 % per weight of the metal oxide.

Lithium alloy can also be used as the lithium electrode instead of the metal lithium. Examples of the lithium alloy include lithium-based metal material such as Li-Al alloy. Another examples of the lithium alloy include intermetallic compound material of a metal such as tin and silicon, and a lithium metal, lithium compound such as lithium nitride, or the like.

The conductive base that exhibits conductivity at the surface in contact with the positive electrode active material and the negative electrode active material is used for the perforated current collector, for example. Examples of the base include a conductive material such as metal, conductive metal oxide, conductive carbon, etc. In particular, the base can be formed of copper, gold, aluminum, or alloy of these metals, or conductive carbon. When the base is made of a non-conductive material, the base is coated with a conductive material for use.

The non-aqueous solvents described below can be used for the electrolyte solution into which the laminate unit having the aforesaid structure is impregnated. Examples of the non-aqueous solvent include chain carbonate, cyclic carbonate, cyclic ester, nitrile compound, acid anhydride, amide compound, phosphate compound, amine compound, etc.

More specifically, examples thereof include ethylene carbonate, diethyl carbonate (DEC), propylene carbonate, dimethoxyethane, γ-butyloractone, N-methyl pyrrolidone, N,N'-dimethyl acetoamide, acetonitrile, mixture of propylene carbonate and dimethoxyethane, mixture of sulfolane and tetrahydrofuran, etc.

Examples of the electrolyte dissolved into the electrolyte solution include lithium salt such as CF₃SO₃Li, C₄F₉SO₈Li, (CF₃SO₂)₂NLi, (CF₃SO₂)₃CLi, LibF₄, LiPF₆, LiClO₄, etc. The solvent into which the electrolyte is dissolved is a non-aqueous solvent. The electrolyte layer interposed between the positive electrode and the negative electrode can be a polymer gel (polymer gel electrolyte) containing non-aqueous solution of the electrolyte. Since electrolyte is dissolved into the water of layered crystal material of vanadium pentoxide, the use of a non-aqueous solvent is demanded as described above.

### EXAMPLES

### Fabrication of positive electrode

In the Example, the starting material in the amorphous part was manufactured by using vanadium pentoxide as a vanadium source and lithium sulfide and lithium hydroxide as a plurality of lithium sources as shown in FIG. 1.

The starting material in the amorphous part was manufactured as described below. Specifically, the molar ratio of the lithium hydroxide to the lithium sulfide was, for example, 25 %. The vanadium pentoxide (400 g), the lithium sulfide, and the lithium hydroxide were suspended in 10 liter of water serving as aqueous solvent. The suspension was heated and stirred for 24 hours under an inert atmosphere, whereby the suspension was refluxed. Specifically, Ar (argon) was fed to the suspension for 30 minutes at 400 ml/min, and a gas bubbling was performed to replace air.

After the inert atmosphere was formed as described above, the suspension was heated to 75 °C. The suspension was heated and stirred for 24 hours so as to reflux at 75°C. After the lapse of 24 hours, the suspension was cooled to room temperature that was 20 °C. After the cooling, the suspension was filtered to remove residues. The filtrate was subject to the spray drying under the condition in which the temperature of hot air to a spraying section of a furnace was 230 °C, whereby black powder material was obtained.

It was confirmed that the obtained powder material had a powder distribution having D50 of 5 µm, In this manner, the material in which the layered crystal material of vanadium pentoxide and the amorphous part were mixedly present, and that could be used as a positive electrode active material, was obtained.

A heat treatment was carried out to 10 g of the amorphous part. For example, when the temperature reached 110 °C (Example 1), 150 °C (Example 2), 180 °C (Example 3), 250 °C (Example 4), and 450 °C (Example 5), respectively, with the rate of temperature rise of 5 °C/min, the respective temperatures were kept for 3 hours. The heat treatment was carried out under the atmosphere of 20 % of oxygen.

90 wt.% of the layered crystal material of vanadium pentoxide was mixed with 5 wt.% of conductive carbon black and 5 wt.% of polyvinylidene fluoride (PVDF), and N-methyl pyrrolidone (NMP) was used as solvent to form slurry. The thus obtained slurry was applied onto a porous aluminum foil by a doctor blade method in such a manner that the mixture density per surface became 2 g/cm³. The slurry was applied on both surfaces or one surface of a copper current collector having through-holes, and the resultant was molded. The molding was cut in a size of 24 mm x 36 mm to obtain positive electrodes.

The heat treatment was carried out at 100 °C (Comparative Example 1) and 500 °C (Comparative Example 2), respectively, by using the same powder as in the Examples 1 to 5.

### Fabrication of negative electrode

Graphite and PVDF serving as a binder were mixed in a weight ratio of 94 : 6 so as to prepare slurry that was diluted with NMP. The thus formed slurry was applied onto both surfaces or one surface of a copper current collector having through-holes in such a manner that the mixture density per surface became 1.7 g/cm³. The resultant was molded, and cut in a size of 26 mm x 38 mm to obtain negative electrodes.

### Fabrication of cell

Twelve positive electrodes and thirteen negative electrodes (two of them had one applied surface) thus obtained were laminated through a polyolefin-based microporous film serving as a separator. A lithium electrode, which had metal lithium adhered onto a stainless porous foil through a separator, was arranged at the outermost part, whereby a three-electrode laminate unit composed of the positive electrodes, negative electrodes, lithium electrodes, and separators were fabricated. The three-electrode laminate unit was packaged with an aluminum laminate film, and electrolyte solution in which lithium bolofluoride was dissolved in 1 mol/l with a weight ratio of ethylene carbonate (EC)/diethyl carbonate (DEC) = 1/3 was injected therein.

### Measurement of rate of capacity deterioration

The cells according to the Examples 1 to 4 and Comparative Examples 1 and 2 fabricated as described above were left for 20 days. Then, when one cell of them was disassembled, no metal lithium remained. It was confirmed from this result that the lithium ions in a required amount were carried and doped, i.e., pre-doped, beforehand into the negative electrodes.

One cell of the remaining cells was subject to the charging/discharging cycle test. The cell was charged in a constant-current constant-voltage (CC-CV) charging method. Specifically, the cell was charged with 0.1 C and 4.1 V. After 30 hours had elapsed, the test was ended. The cell was discharged with a constant current (CC) discharging method in which the test was ended when the current assumed 0.05 C and the voltage assumed 1.35 V. The rate of capacity deterioration was calculated in terms of a difference of the discharge capacity in a certain period of cycles divided by cycles.

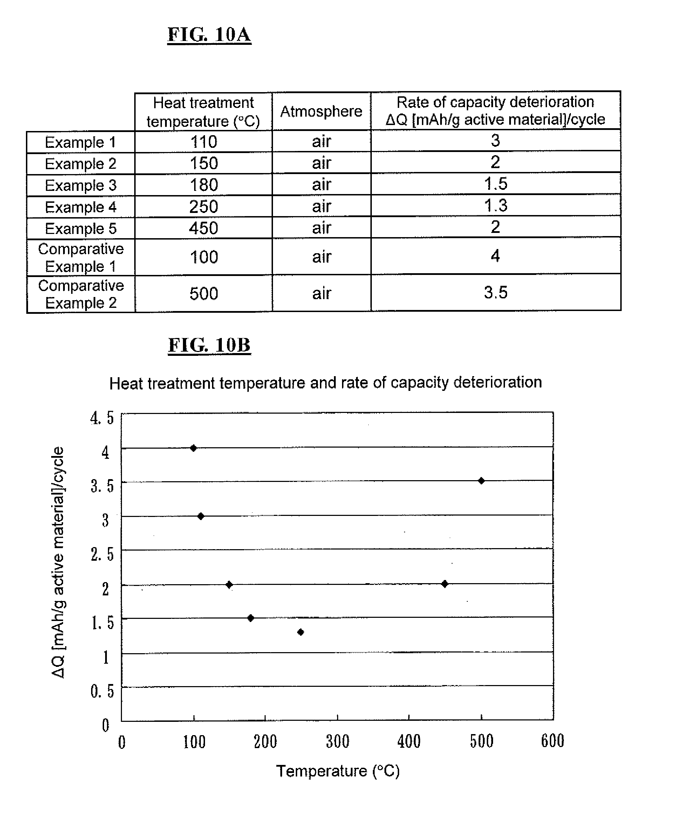

FIGS. 10A and 10B show the results of the measurement. As shown in FIGS. 10A and 10B, the rate of capacity deterioration represented by ΔQ (mAh/g active material)/cycle was 4. However, the rates of capacity deterioration at 150 °C, 180 °C, 250 °C, and 450 °C were 2 or less that was a half of 4. Specifically, the rate of capacity deterioration was 2 at 150 °C, 1.5 at 180 °C, 1.3 at 250 °C, and 2 at 450 °C.

The present invention has been specifically described above with reference to the embodiments and examples. The present invention is not limited to the aforesaid embodiments and examples, and various modifications are possible without departing from the scope of the present invention.

The present invention is well adaptable to a field of a positive electrode used in a lithium ion secondary battery.

## Claims

1. A layered crystal material of vanadium oxide used as a positive electrode active material,
wherein the vanadium oxide has a layered crystal material, and the layered crystal material has microcrystal particles having a layer length of less than 100 nm.

2. The layered crystal material according to claim 1,
wherein an average area ratio of the layered crystal particles, which average area ratio is calculated from the area ratios of the layered crystal particles in a plurality of cross-sectional photographs taken from one direction of the layered crystal material, is 95 % or more.

3. A manufacturing method of an electrode material using layered crystal vanadium usable as a positive electrode active material, wherein an amorphous vanadium oxide manufactured from at least a vanadium material and lithium material is heated at a temperature within a range of not less than 105 °C to not more than 500 °C.

4. The manufacturing method according to claim 3,
wherein the layered crystal vanadium is a layered crystal material of vanadium oxide,
wherein the vanadium oxide has a layered crystal material, and
wherein the layered crystal material has microcrystal particles having a layer length of less than 100 nm.

5. The manufacturing method according to claim 3 or claim 4,
wherein the vanadium oxide is heated at an oxygen partial pressure of not less than 0 % and not more than 100 %.

6. The manufacturing method according to any one of claims 3 to 5,
wherein the rate of temperature rise is not more than 10 °C/min in the heating.

7. The manufacturing method according to any one of claims 3 to 6,
wherein the amorphous vanadium oxide is manufactured by using a plurality of lithium materials as the lithium material.

8. The manufacturing method according to claim 7,
wherein the plurality of lithium materials are manufactured through a process in which the vanadium material and the plurality of lithium materials are suspended in an aqueous solvent, and
wherein the suspension is subsequently heated under an inert atmosphere.

9. The manufacturing method according to claim 7,
wherein the plurality of lithium materials are manufactured through a process in which the vanadium material and the plurality of lithium materials are melted, and then the resultant is rapidly cooled.

10. The manufacturing method according to any one of claims 3 to 9,
wherein the amorphous part decreases and the layered crystal material increases in the amorphous vanadium oxide serving as a starting material through the manufacturing process.

11. An electric storage device including an electrode using the active material manufactured according to a manufacturing method of an electrode material according to any one of claims 3 to 10.
